# EUROPEAN PATENT SPECIFICATION

(11) **EP 0 331 432 B1**
(45) Date of publication and mention of the grant of the patent: **07.09.1994**
(21) Application number: 89301980.2
(22) Date of filing: 28.02.1989
(51) Int. Cl.: A47L 5/22, A01G 1/12

(54) **A suction cleaner**
Staubsauger
Aspirateur de poussières

(43) Date of publication of application: 06.09.1989
(73) Proprietor: KABUSHIKI KAISHA SUIDEN, Tennojiku Osakashi (JP)
(72) Inventor: Kawai, Yuzo, Ikomagun Nara (JP)
(74) Representative: Bannerman, David Gardner

(56) References cited:
- DE-A- 3 005 701
- US-A- 3 790 094
- US-A- 4 076 460
- US-A- 4 325 163

## Description

The present invention relates to a suction cleaner for collecting relatively large refuse on roads and gardens, such as dead leaves and branches.

Portable suction cleaners are known which comprise a suction duct in a front section and a power vacuum pump in a rear section. The suction duct has a simple hollow construction, so that it is often choked with relatively large refuse such as twigs or rubbish lumps.

In US-A-2733000, there is disclosed an invention for a cutter mechanism for a suction cleaner. The stator blade is removable from the apparatus, but it is not retractable to an inoperative position.

One object of the present invention is to avoid such choking and to provide a suction cleaner capable of shredding the sucked refuse to pieces.

According to the present invention we propose a suction cleaner comprising a dust chamber, a suction chamber communicating with the dust chamber so that a sucked refuse is introduced into the dust chamber, and outlet duct tangentially connected to the dust chamber for discharging refuse from the dust chamber, agitator means mounted on a rotatable shaft extending into the dust chamber and presenting first blades on the inner side thereof, a second blade formed in a shank provided in the suction chamber, and drive means connected to the shaft for rotating the agitator means and producing suction within the suction chamber), characterised by the said shank being retractable from an operative position in which the second blade is presented to the first blades with such a gap as to shred the refuse therebetween, to an inoperative position at which the second blade is remote from the first blade.

Further preferred embodiments of the invention are defined in dependent Claims 2 to 5.

Other features of the present invention will become apparent from the following detailed description by way of example, of preferred embodiments. Reference is made to the accompanying drawings in which:
Figure 1 is a vertical cross-section through part of a suction cleaner;
Figure 2 is a view from the right in Figure 1;
Figure 3 is a plan view of a part of the suction cleaner of Figure 1;
Figure 4 shows in cross-section details of a modification to the cleaner of Figure 1;
Figure 5 is a plan view showing a modified cleaner;
Figure 6 is a front view of the cleaner of Figure 5; and
Figure 7 is a fragmentary cross-section showing a small object caught between a rotary blade and a stationary blade, in the embodiment of Figures 5 and 6.

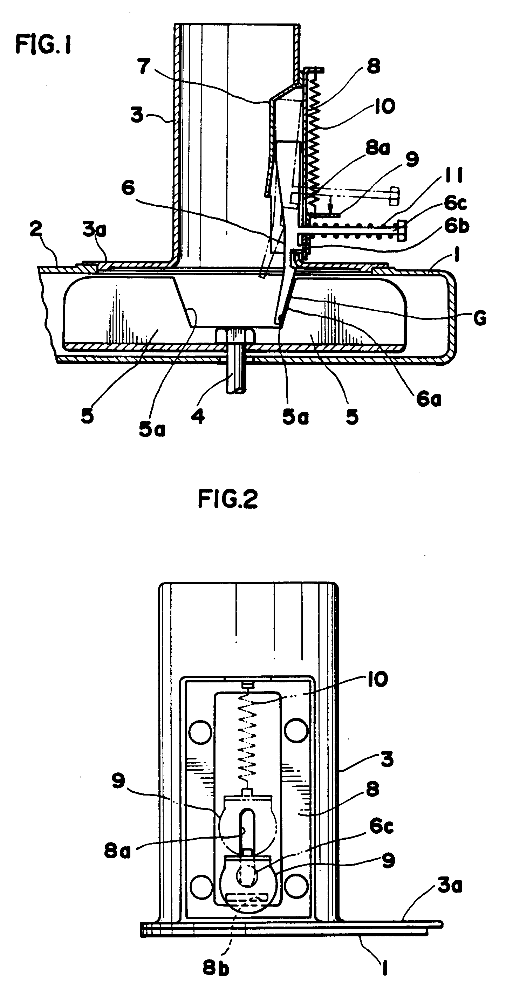

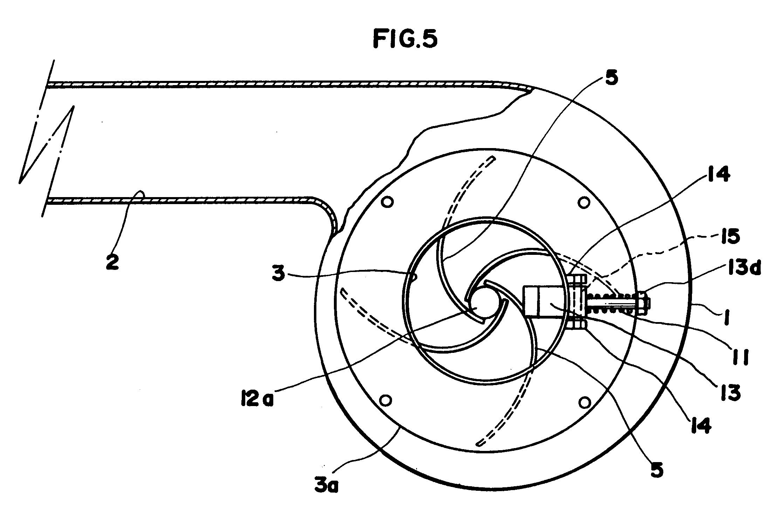

Referring to Figures 1 to 4 the suction cleaner of the invention has a dust chamber 1 and an outlet duct 2 tangentially connected to the dust chamber 1 (refer to Figure 5). The dust chamber 1 has an open top end which is covered by a cylindrical suction chamber 3, wherein a ring-shaped flange 3a thereof is fixed to the periphery of the open top end of the dust chamber 1. Within the dust chamber 1 is an agitator in the form of a rotor having radially extending vanes 5 and fixed to a driving shaft 4 projecting into the dust chamber 1. Each vane 5 has an outer side and an inner side, which is formed into a blade 5a as best shown in Figure 1. Hereinafter these blades 5a will be referred to as rotary blades, as opposed to a stationary blade 6a, which will be described below.

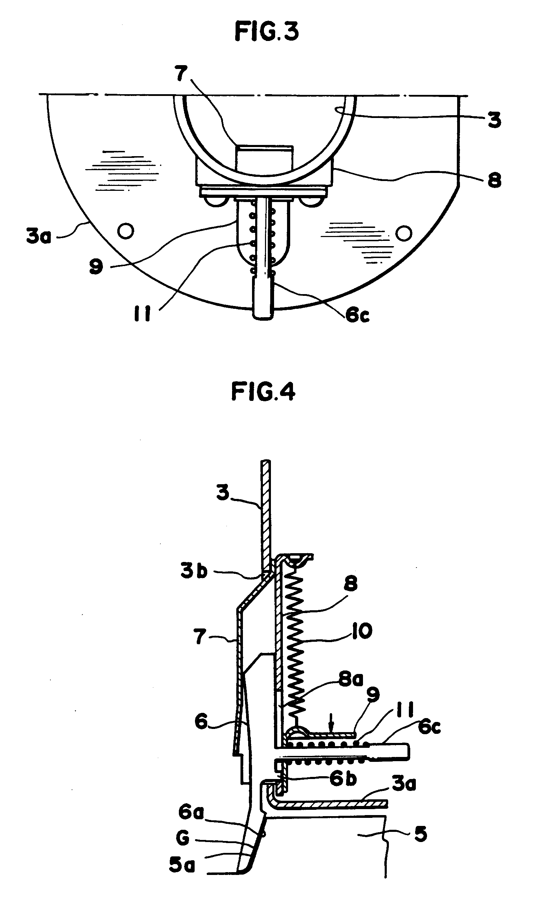

The stationary blade 6a is formed on the lower end portion of a shank 6 adjacent the inner side of the rotary vanes 5. The shank 6 is normally located in an operative position at which, as shown in Figure 1, the stationary blade 6a is presented to the rotary blades 5a leaving therebetween a gap (G) sufficient to enable both blades 5a and 6a to shred the refuse therebetween. The shank 6 has a protuberance 6b and a ledge 6c supporting a coil spring 11. The suction chamber 3 has a window 3b is which the shank 6 is movable provided. The window 3b is covered with an inner cover 7 and the shank 6 is covered with an outer cover 7 (as best shown in Figure 4) both being fixed to the dust chamber 3 with the shank 6 located between them. The outer cover 8 has a vertically extending slot 8a in which the ledge 6c is movable inserted and a horizontally extending slit 8b slightly below the vertical slot 8a in which the protuberance 6b is releasably inserted. The ledge 6c passes through a holder 9 for one end of a spring 10 the other end of which is fixed to an upper portion of the outer cover 8. In this way the ledge 6c is upwardly biased by the spring 10. The spring 11 on the ledge 6c is supported against the spring holder 9. If anything is caught in the blades 5a and 6a, the stationary blade 6a is forced away from the rotary blades 5a against the spring 11 to disengage the protuberance 6b from the slit 8b. As a result, the shank 6 is withdrawn upwardly from the operative position to the position shown by phantom lines in Figure 1. Thus, the blades 5a and 6a are protected against breakage.

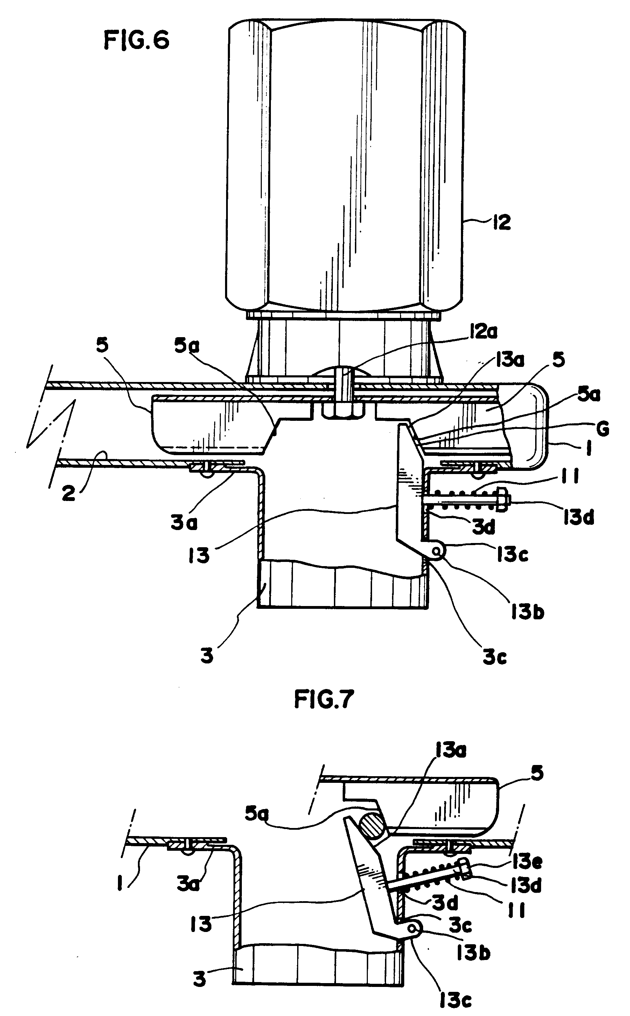

Figures 5 to 7 show a modified version of the suction cleaner in which the dust chamber 3 is connected to the suction chamber 1 at its bottom. The outlet duct 2 is likewise tangentially connected to the suction chamber 1. The rotor vanes 5 having blades 5a are radially fixed to a driving shaft 12a of a motor 12 mounted on top of the suction chamber 1. The vanes 5 are curved in the direction of rotation. There is provided an L-shaped shank 13 having a short leg 13c and a blade 13a, a ledge 13d supporting the spring 11, and a bent tail portion 13c having a round hole 13b. The ledge 13d and the short leg 13c respectively pass through apertures 3d and 3c formed in a wall of the dust chamber 3. The short leg 13c has a round hole 13b through which a flanged pin 15 passes as shown in Figure 5. Flanges 14 serves to retain the pin 15 in the hole 13b. The ledge 13d supports a spring 11 against the wall of the dust chamber 3. Normally the shank 13 is disposed in an operative position as shown in Figure 6 with an adequate gap (G) between the two blades 5a and 13a. However, if a relatively large object such as a stone is caught in the gap, the shank 13 is angularly displaced as shown in Figure 7 so that the stationary blade 13a is forced away from the rotary blades 5a. In this way the blades 5a and 13a are protected against breakage.

When the cleaner is switched on, the motor is driven, thereby sucking refuse on a road into the dust chamber through the suction chamber. The refuse is cut to pieces by and between the rotary blades and the stationary blades. Small pieces of refuse are then discharged through the outlet duct 2, which is normally fitted with a storage bag. The cleaner may include a battery, thereby making it portable for use in the absence of any other source of electricity.

## Claims

1. A suction cleaner comprising a dust chamber (1), a suction chamber (3) communicating with the dust chamber (1) so that a sucked refuse is introduced into the dust chamber (1), and outlet duct (2) tangentially connected to the dust chamber (1) for discharging refuse from the dust chamber (1), agitator means (5) mounted on a rotatable shaft (4) extending into the dust chamber (1) and presenting first blades (5a) on the inner side thereof, a second blade (6a) (13a) formed in a shank (6) provided in the suction chamber (3), and drive means connected to the shaft for rotating the agitator means (5) and producing suction within the suction chamber (3), characterised by the said shank (6) being retractable from an operative position in which the second blade (6a) (13a) is presented to the first blades (5a) with such a gap as to shred the refuse therebetween, to an inoperative position at which the second blade (6a) (13a) is remote from the first blades (5a).

2. A cleaner according to claim 1, wherein the shank (6) is retained either at the operative position or the inoperative position by means of springs (10) (11).

3. A cleaner according to any preceding claim, wherein the first blades (5a) and the second blade (6a) (13a) are arranged obliquely parallel with each other.

4. A cleaner according to any preceding claim, wherein the drive means with a battery is mounted within the suction chamber (3).

5. A cleaner according to any preceding claim, wherein the suction chamber (3) comprises a window (3b) in which the shank (6) is provided, the window (3b) being covered by covers (7) (8).

## Patentansprüche

1. Staubsauger mit einer Müllkammer (1), einer Ansaugkammer (3), die in Verbindung steht mit der Müllkammer (1), so daß angesaugter Abfall in die Müllkammer (1) eingeführt wird, einem Austrittskanal (2), der tangential mit der Müllkammer (1) verbunden ist, zum Herausbefördern des Abfalls aus der Müllkammer (1), einer Rührereinrichtung (5), die auf einer drehbaren Welle (4) angeordnet ist, sich in die Müllkammer (1) erstreckt und erste Messer (5a) auf ihrer Innenseite, ein zweites Messer (6a) (13a), das in einem Schaft (6) ausgebildet ist, der in der Ansaugkammer (3) angeordnet ist, und eine Antriebseinrichtung aufweist, die mit der Welle verbunden ist zum Drehen der Rühreinrichtung (5) und zum Erzeugen eines Sogs in der Ansaugkammer (3), dadurch gekennzeichnet, daß der Schaft (6) zurückgezogen wird von einer Betriebsposition, in der das zweite Messer (6a) (13a) gegenüber den ersten Messern (5a) einen solchen Spalt aufweist, daß der Abfall dazwischen geschreddert wird, in eine Nichtbetriebsposition, in der das zweite Messer (6a) (13a) von den ersten Messern (5a) entfernt ist.

2. Staubsauger nach Anspruch 1, bei dem der Schaft (6) mittels Federn (10) (11) entweder in der Betriebsposition oder der Nichtbetriebsposition gehalten wird.

3. Staubsauger nach einem der vorangegangenen Ansprüche, bei dem die ersten Messer (5a) und das zweite Messer (6a) (13a) geneigt parallel zueinander angeordnet sind.

4. Staubsauger nach einem der vorangegangenen Ansprüche, bei dem die Antriebseinrichtung mit einer Batterie in der Ansaugkammer (3) angeordnet ist.

5. Staubsauger nach einem der vorangegangenen Ansprüche, bei dem die Ansaugkammer (3) ein Fenster (3b) aufweist, in dem der Schaft (6) angeordnet ist, wobei das Fenster (3b) mit Abdeckungen (7) (8) abgedeckt ist.

## Revendications

1. Aspirateur comportant une chambre à poussière (1), une chambre d'aspiration (3) communicant avec la chambre à poussière (1) de telle sorte qu'un déchet aspiré soit introduit dans la chambre à poussière (1), et un conduit de sortie (2) connecté de façon tangentielle à la chambre à poussière (1) de façon à décharger le déchet depuis la chambre à poussière (1), des moyens àgitateurs (5) montés sur un arbre rotatif (4) s'étendant entre la chambre à poussière (1) et présentant des premières lames (5a) sur le côté intérieur de ceux-ci, une deuxième lame (6a) (13a) formée dans une tige (6) disposée dans la chambre d'aspiration (3), et des moyens d'actionnement connectés à l'arbre pour faire tourner les moyens agitateurs (5) et pour produire une aspiration à l'intérieur de la chambre d'aspiration (3), caractérisé en ce que ladite tige (6) est rétractable d'une position fonctionnelle dans laquelle la deuxième lame (6a) (13a) est présentée aux premières lames (5a) avec un espace tel qu'il permette de découper les déchets entre elles, à une position non-fonctionnelle dans laquelle la deuxième lame (6a) (13a) est éloignée des premières lames (5a).

2. Aspirateur selon la revendication 1, dans lequel la tige (6) est maintenue soit dans la position fonctionnelle soit dans la position non-fonctionnelle au moyen de ressorts (10) (11).

3. Aspirateur selon l'une quelconque des revendications précédentes, dans lequel les premières lames (5a) et la deuxième lame (6a) (13a) sont disposées en oblique parallèlement les unes aux autres.

4. Aspirateur selon l'une quelconque des revendications précédentes, dans lequel les moyens d'actionnement comportant une pile ou une batterie sont montés à l'intérieur de la chambre d'aspiration (3).

5. Aspirateur selon l'une quelconque des revendications précédentes, dans lequel la chambre d'aspiration (3) comporte une fenêtre (3b) dans laquelle est disposée la tige (6), la fenêtre (3b) étant couverte par des capots (7) (8).
